# EUROPEAN PATENT SPECIFICATION

(11) **EP 2 220 934 B1**
(45) Date of publication and mention of the grant of the patent: **07.05.2014**
(21) Application number: 08849038.8
(22) Date of filing: 25.09.2008
(51) Int. Cl.: A01N 25/18, A01N 25/10, A01N 47/46, A01P 3/00, A61L 9/01, A61L 9/04, B65D 77/04, A61L 9/12

(54) **CONTAINER FOR VOLATILE ALLYL ISOTHIOCYANATES**
BEHÄLTER FÜR FLÜCHTIGE ALLYLISOTHIOCYANATE
RÉCIPIENT POUR DES ISOTHIOCYANATES D'ALLYLE VOLATILES

(30) Priority: 13.11.2007 JP 2007294254
(43) Date of publication of application: 25.08.2010
(73) Proprietor: Rengo Co., Ltd., Osaka-shi Osaka 553-0007 (JP)
(72) Inventor: KAMEI, Kiyoshi, Echizen-shi Fukui 915-0011 (JP); TAJIMA, Hirokuni, Echizen-shi Fukui 915-0011 (JP); YAMATE, Tetsuro, Koga-shi Fukuoka 811-3136 (JP)
(74) Representative: Grünecker, Kinkeldey, Stockmair & Schwanhäusser
(86) International application number: PCT/JP2008/067255
(87) International publication number: WO 2009/063693

(56) References cited:
- EP-A1- 1 440 696
- JP-A- 2006 123 958
- JP-Y2- S 601 730
- JP-Y2- 60 001 730
- US-A- 3 576 987
- US-A- 3 584 211
- DATABASE WPI Week 200635 Thomson Scientific, London, GB; AN 2006-338129 XP002696957, -& JP 2006 123958 A (TOPPAN PRINTING CO LTD) 18 May 2006 (2006-05-18)

## Description

### TECHNICAL FIELD

This invention relates to an agent that retains allyl isothiocyanate and capable of volatilizing it when necessary.

### BACKGROUND ART

Allyl isothiocyanate has anti-bacterial and bactericidal effect, and when it is volatilized in the air as needed, effects such as mold prevention can be obtained. However, if liquid allyl isothiocyanate is dropped directly, it volatilizes at once and its effect does not last long. Also, it has strong irritating smell and a person nearby may feel unpleasant. Therefore in many cases, e.g., in Patent Document 1, allyl isothiocyanate is packed with a packing material such as polypropylene that allows allyl isothiocyanate to permeate gradually.

In a volatile agent comprising such a packing material, allyl isothiocyanate continuously volatilizes and, when storing such a volatile agent, it needs to be wrapped and sealed with a barrier packing material that does not allow allyl isothiocyanate to permeate. However, if sealing such a volatile agent from outside, allyl isothiocyanate saturates inside the barrier packing material and dew condensation occurs in some cases. This may cause problems such as release of a large amount of allyl isothiocyanate upon opening the package accompanied with irritating smell during use or staining hands with the condensed allyl isothiocyanate.

For such problems, containing condensation preventive agent in the barrier packing material is known. However, this makes observing the remaining amount of the allyl isothiocyanate difficult. Also, when allyl isothiocyanate is retained in a porous retaining material, such as the method described in

Patent Document 2, so that the color will change when the remaining amount decreases, the vapor pressure is curbed when allyl isothiocyanate decreases and volatilization does not complete due to the condensation prevention agent, resulting in a problem that the color does not change.

As an agent that can release a volatile substance as needed, a double tube agent is known comprising a glass ampoule sealing an aroma liquid inside and a hollow vessel made of a porous plastic such as polypropylene and covering the glass ample, such as the one described in Patent Document 3. When volatilizing the chemical, the inner glass ample is broken by applying force from outside so that the chemical gradually passes through the hollow vessel and volatilizes. If this chemical is allyl isothiocyanate, there will be neither rapid volatilization when starting volatilization, nor staining hands with condensed liquid.

Patent Document 1: JP 2004-224382A (EP 1 440 696 A1)
Patent Document 2: JP 11-70157A
Patent Document 3: JP 58-134931A

### DISCLOSURE OF THE INVENTION

### OBJECT OF THE INVENTION

However, in the agent described in Patent Document 3, the glass ampoule inside the hollow outer vessel is jolted and sometimes hit against the outer vessel and broken by an unintended shock. To prevent this, if liquid such as water, organic solvent or oil is filled between the outer vessel and the glass ampoule, the liquid absorbs shock and prevents the glass ampoule from being broken. However, if the liquid is water, the water reacts with allyl isothiocyanate and the agent becomes useless as a control release material for a volatile substance. If the liquid is an organic solvent or oil, allyl isothiocyanate is taken in by the organic solvent or oil and thus volatilization becomes incomplete, resulting in decrease in efficiency.

An object of the present invention is to improve shock resistance of a double tube allyl isothiocyanate volatile agent comprising a breakable inner vessel sealing allyl isothiocyanate therein and a flexible outer vessel made of allyl isothiocyanate-permeable resin sealing the inner vessel therein so as to prevent unintended breakage of the inner vessel and consequent start of volatilization.

### MEANS TO ACHIEVE THE OBJECT

The present invention achieves the above-mentioned object by setting the ratio Y/X of the inner length X of the outer vessel and the outer length Y of the inner vessel to be 94% or over and 99.9% or under, and the ratio Q/P of the inner diameter P of the outer vessel and the outer diameter Q of the inner vessel to be 75% or over and 99.9% or under.

By setting these size ratios of the inner vessel and the outer vessel to be within the above-mentioned ranges, the space between the outer vessel and the inner vessel becomes small. This reduces relative speed when the inner vessel is hit against the outer vessel by inertia caused by a move of the agent, thereby reducing the possibility of breakage of the inner vessel.

Also, the inner vessel preferably has a wall thickness β of 0.05 mm or over and 0.6 mm or under. If this wall thickness is below 0.05 mm, the inner vessel is prone to unintended breakage when the agent receives impulsive vibration such as when the agent falls. On the other hand, if the thickness is larger than 0.6 mm, the agent may be hard to be bent by an average consumer. Further, the ratio α/β of the wall thickness α of the outer vessel and the wall thickness β of the inner vessel is preferably 3 or over and 10 or under. If the ratio α/β is below 3, pin holes may open on the outer vessel when the inner vessel is broken, resulting in the allyl isothiocyanate's leaking outside the outer vessel and staining hands, or the broken inner vessel may tear the outer vessel and hurt hands. On the other hand, a ratio α/β exceeding 10 is not realistic since the inner vessel becomes prone to breakage by impulsive vibration such as when the agent falls, or the outer vessel may be hard to be bent when the agent is to be volatilized.

By using transparent or semi-transparent resin such as polypropylene for the resin forming the above-mentioned outer vessel, remaining amount of the allyl isothiocyanate in the agent can be visually observed. However, materials such as polystyrene or acrylonitrile-butadiene-styrene rubber (ABS) cannot be used since they are soluble to allyl isothiocyanate. Also, remaining amount of allyl isothiocyanate can be visually observed clearly from outside if the allyl isothiocyanate to be filled in the inner vessel is colored in advance with a coloring agent or if a coloring agent is sealed in the space between the outer vessel and the inner vessel. The outer vessel may be dyed if a dye is used for a coloring agent. However, a pigment will not dye the outer vessel and the remaining amount of the allyl isothiocyanate can be adequately indicated.

### EFFECT OF THE INVENTION

According to the present invention, a double tube allyl isothiocyanate volatile agent can be obtained which is less prone to breakage of the inner vessel during storage and in which volatilization of the allyl isothiocyanate can be started by easily breaking the inner vessel when necessary.

### BRIEF DESCRIPTION OF THE DRAWINGS

Fig. 1 is a sectional view of an allyl isothiocyanate volatile agent according to the present invention, and
Fig. 2 is a sectional view of the allyl isothiocyanate volatile agent when its inner vessel is broken by bending.

### DESCRIPTION OF THE NUMERALS

- 11: Outer vessel
- 12: Inner vessel
- 13: Allyl isothiocyanate
- α: Thickness of the outer vessel
- β: Thickness of the inner vessel
- P: Inner diameter of the outer vessel
- Q: Outer diameter of the inner vessel
- X: Inner length of the outer vessel
- Y: Outer length of the inner vessel

### DETAILED DESCRIPTION OF PREFERRED EMBODIMENTS

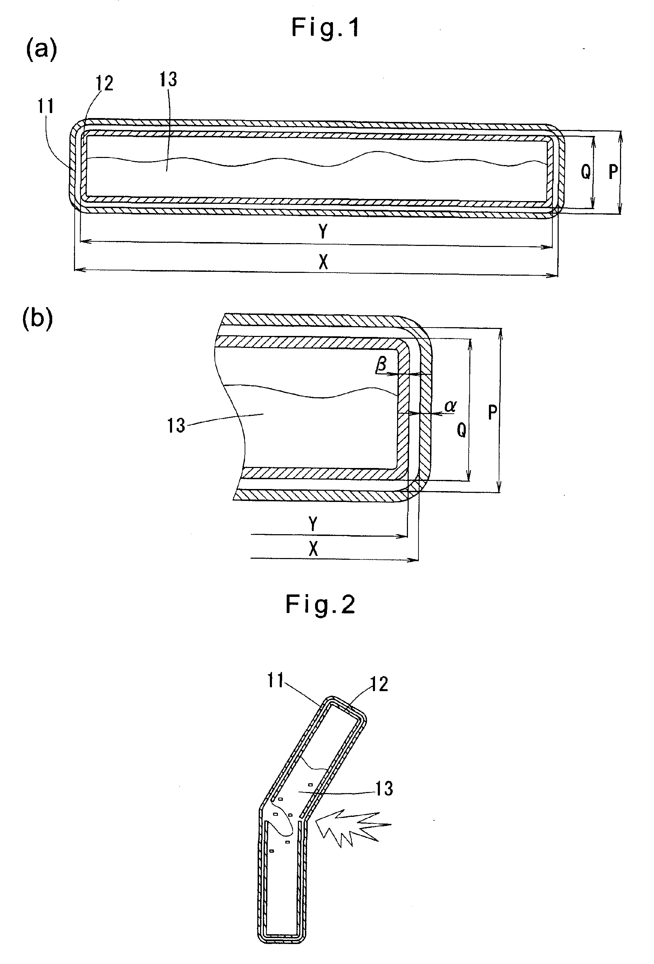

The embodiment of the present invention is now described in detail. The present invention is, as shown in Fig. 1, a volatile agent of allyl isothiocyanate comprising a breakable sealed cylindrical inner vessel made of glass 12 containing allyl isothiocyanate 13 inside, and a sealed flexible cylindrical outer vessel 11 made of a resin permeable to the allyl isothiocyanate 13, outside the inner vessel 12. Before the inner vessel 12 is broken, it prevents release of the allyl isothiocyanate 13. When stress is applied from outside to the outer vessel 11, the inner vessel 12 is broken as shown in Fig. 2, and then the allyl isothiocyanate 13 can be released through the outer vessel 11. Dimensions of the agent are now described according to Fig. 1.

In this volatile agent of allyl isothiocyanate, the ratio Y/X of the inner length X of the outer vessel 11 and the outer length Y of the inner vessel 12 is 94% or over and 99.9% or under. If the clearance between the outer vessel 11 and the inner vessel 12 is too large, the inner vessel 12 hits hard against the inner wall of the outer vessel 11 when the volatile agent of allyl isothiocyanate according to the present invention is moved. If the ratio Y/X is less than 94%, this hitting force becomes too hard and the inner vessel 12 may be broken by accident. On the other hand, if the outer vessel 11 is in close contact with the inner vessel 12 when completely sealing the outside of the inner vessel 12 with a flexible resin, the inner vessel 12 may be broken. The ratio Y/X therefore cannot be made to 100% and is realistically not greater than 99.9%.

In the above-mentioned volatile agent of allyl isothiocyanate, the ratio Q/P of the inner diameter P of the outer vessel 11 and the outer diameter Q of the inner vessel 12 is 75 or over and 99.9% or under. Similarly to the above, the clearance between the outer vessel 11 and the inner vessel 12 is preferably small. If the diameter of the inner vessel 12 is too small, the inner vessel 12 moves freely inside the outer vessel 11 and it will be highly possible that the inner vessel 12 hits hard against the inner wall of the outer vessel, thereby being broken. This possibility becomes unignorably high if the ratio Q/P is below 75%. However, since the sealed inner vessel 12 is inserted in the outer vessel 11 in the manufacturing process, the ratio Q/P cannot be made to 100% and is thus realistically not greater than 99.9%.

In the above-mentioned volatile agent of allyl isothiocyanate, the ratio T/S of the inner volume S of the outer vessel 11 and the outer volume T of the inner vessel 12 is preferably 70 or over and 90% or under. This is because even if the above-mentioned conditions for the ratios Y/X and Q/P are met, if both length and diameter are extreme, the vessels may become prone to breakage or difficult to be sealed.

In the above-mentioned volatile agent of allyl isothiocyanate, the thickness β of the inner vessel 12 is preferably 0.05 mm or thicker. If the thickness β is below 0.05 mm, it does not have sufficient shock resistance, and will be highly prone to breakage under some handling conditions such as during shipment even when the size ratios of the outer vessel 11 and the inner vessel 12 are within the ranges specified above. Also the thickness β is preferably not thicker than 0.6 mm. In the volatile agent of allyl isothiocyanate according to the present invention, to volatilize the allyl isothiocyanate 13, the flexible outer vessel 11 has to be deformed by applying stress from the outside, as shown in Fig. 2, so as to break the inner vessel 12. At this time, if the thickness β is larger than 0.6 mm, the inner vessel 12 cannot be easily broken. Further in the above-mentioned volatile agent of allyl isothiocyanate, the ratio α/β of the thickness α of the outer vessel 11 and the thickness β of the inner vessel 12 is preferably 3 or more. If this ratio α/β is below 3, pin holes may be opened on the outer vessel 11 when the inner vessel 12 is broken, which may lead to leakage of the allyl isothiocyanate 13 from the outer vessel 11, staining hands, or the broken inner vessel 12 may break the outer vessel 11 and come out, hurting hands. On the other hand, a ratio α/β larger than 10 is not realistic.

In the above-mentioned volatile agent of allyl isothiocyanate, the thickness α of the outer vessel 11 is preferably 0.3 mm or thicker. If the thickness α is below 0.3 mm, pin holes may be opened when deformed by applying stress from outside, or the outer vessel 11 may be torn by the broken inner vessel 12. On the other hand, the thickness α is preferably 3 mm or less. If it exceeds 3 mm, sufficient amount of allyl isothiocyanate cannot be permeated even if allyl isothiocyanate-permeable resin such as polypropylene is used, so that the effect of the allyl isothiocyanate volatile agent may become insufficient. Also, if the thickness is larger than 3 mm, it may become difficult to break the inner vessel 12 even when stress is applied from outside.

Breakable material forming the above-mentioned inner vessel of the allyl isothiocyanate volatile agent is glass.

The resin forming the outer vessel 11 of the above-mentioned allyl isothiocyanate volatile agent is preferably a transparent or semi-transparent resin. Here, "transparent" or "semi-transparent" means that light can permeate the material at least to the extent that the amount of liquid inside the outer vessel 11 can be visually observed. Such transparent or semi-transparent materials which also allow permeation of the allyl isothiocyanate 13 include polypropylene or polyethylene. However, materials such as polystyrene and ABS cannot be used for the outer vessel 11 since they melt when they contact the allyl isothiocyanate 13.

Further preferably, the above-mentioned allyl isothiocyanate volatile agent contains a coloring agent sealed therein since the remaining amount of the allyl isothiocyanate 13 can be visually observed through the transparent or semi-transparent outer vessel 11. As a method to add this coloring agent, the allyl isothiocyanate 13 to be contained in the inner vessel 12 may be dyed with a coloring agent in advance, or the coloring agent may be encapsulated between the outer vessel 11 and the inner vessel 12 so that the allyl isothiocyanate 13 is dyed with this coloring agent when the inner vessel 12 is broken and the allyl isothiocyanate 13 flows into the outer vessel 11 as shown in Fig. 2.

As the above-mentioned coloring agent, pigments, dyes or antioxidants may be used. Specific pigments include organic pigments such as cyanine blue, fast red, fast yellow, cyanine green and permanent red, and inorganic pigments such as titanium oxide, carbon and Prussian blue. Specific dyes include oily dyes such as C. I. Solvent Red 23, C. I. Solvent Red 24, C. I. Solvent Red 26, C. I. Solvent Yellow 2, C. I. Solvent Yellow 7, C. I. Solvent Yellow 14, C. I. Solvent Blue 35, C. I. Solvent Blue 37, and C. I. Solvent Blue 38, dispersion dyes such as C. I. Disp. Red 54, C. I. Disp. Red 60, C. I. Disp. Red 73, C. I. Disp. Red 92, C. I. Disp. Yellow 51, C. I. Disp. Yellow 54, C. I. Disp. Yellow 64, C. I. Disp. Blue 56, C. I. Disp. Blue 79, C. I. Disp. Blue 81, and C. I. Disp. Blue 139, and other dyes such as building dyes. Specific antioxidants include materials that are soluble in allyl isothiocyanate and can color it, such as Vitamin E and rosemary.

Among the above-mentioned coloring agents, dyes may color the outer vessel 11 made of a resin, thus making it difficult to clearly show the remaining amount of allyl isothiocyanate 13. Pigments are more preferable since they are free of this problem and can clearly show the remaining amount of the allyl isothiocyanate.

Also with the above-mentioned coloring agent, other contents may be added as long as they do not react with the allyl isothiocyanate 13 and their influence on volatilization of the allyl isothiocyanate 13 is ignorable. Such other contents include antioxidants such as dibutylhydroxytoluene and dibutylhydroxyanisole, and light stabilizers such as 2-hydroxy-4-methoxybenzophenone and 2-(2'-hydroxy-5'-methylphenone) benzotriazole.

Natural resins such as rosin, rosin ester and shellac, and fatty acid glycerides such as hydrogenated terpene resin and coconut oil inherently serve as dew condensation preventing agents. However, in the above-mentioned allyl isothiocyanate volatile agent, the allyl isothiocyanate 13 does not come outside through the outer vessel 11 until the inner vessel 12 is broken. Therefore the allyl isothiocyanate 13 cannot condensate when the product is packed and unused such as during storage, and thus a dew condensation preventing agent is not needed. These dew condensation prevention agents rather curb volatilization of the allyl isothiocyanate 13 when they are mixed with the allyl isothiocyanate 13, thereby causing problems of incomplete volatilization of the allyl isothiocyanate 13. It is therefore preferable that the above-mentioned allyl isothiocyanate volatile agent does not contain resin or fatty acid glyceride.

A production method for the allyl isothiocyanate volatile agent according to this invention comprises, for example, filling the allyl isothiocyanate 13 in the cylindrical and breakable inner vessel 12 with one open end, sealing the opening by welding, inserting this inner vessel 12 in the outer vessel 11 which has one open end and can contain the inner vessel 12, and then sealing the opening of the outer vessel 11 by welding.

In the allyl isothiocyanate volatile agent according to the present invention, since the allyl isothiocyanate 13 cannot permeate the glass during storage before the inner vessel 12 is broken, unnecessary volatilization of the allyl isothiocyanate 13 and irritating odor are prevented. When the allyl isothiocyanate 13 needs to be volatilized, the outer vessel 11 is bent by applying stress from outside as shown in Fig. 2, thereby breaking the inner vessel 12 and making the allyl isothiocyanate 13 flow into the outer vessel 11. The allyl isothiocyanate volatile agent according to the present invention can thus work as a controlled release agent in which the allyl isothiocyanate 13 is gradually volatilized through the allyl isothiocyanate-permeable outer vessel 11.

### EXAMPLES

Now the present invention is described in detail referring to examples.

### <Release Test>

### (Example 1)

A glass vessel with length of 64 mm, outer diameter of 5.1 mm and thickness of 0.179 mm was filled with 0.7 g of allyl isothiocyanate (made by Nippon Terpene Chemicals, Inc.) and then the opening of this inner vessel was sealed by welding to form an inner vessel. The inner vessel was inserted in a polypropylene outer vessel with length of 75 mm, inner length of 65 mm, outer diameter of 7.5 mm, inner diameter of 5.9 mm and thickness of 0.8 mm, and the opening of the outer vessel was sealed by welding to obtain an allyl isothiocyanate volatile agent. This allyl isothiocyanate volatile agent was left at 30°C temperature with its inner vessel not being broken, and was weighed chronically, its decrease of weight per day being taken as amount of release of the allyl isothiocyanate. The result is shown in Table 1.

**[Table 1]**

| | Inner vessel (mm) | | | Outer vessel (mm) | | | | | Ratio | | | Amount of AITC release (mg/day) | | | | | | | Number of break/test | |
|---|---|---|---|---|---|---|---|---|---|---|---|---|---|---|---|---|---|---|---|---|
| | L | Outer ϕ | T | L | Inner L | Outer ϕ | Inner ϕ | T | Y/X | Q/P | α/β | 5 | 7 | 9 | 14 | 16 | 19 | 22 | Horizontal | Vertical |
| Example 1 | 64 | 5.1 | 0.179 | 75 | 65 | 7.5 | 5.9 | 0.8 | 98.5% | 86.4% | 4.5 | 0 | 0 | 0 | 0 | 0 | 0 | 0 | | |
| Example 2 | 64 | 5.1 | 0.179 | 75 | 65 | 7.5 | 5.9 | 0.8 | 98.5% | 86.4% | 4.5 | 10.2 | 10.5 | 10.7 | i o.7 | 11 | 10.6 | 11 | | |
| Example 3 | 109 | 5.1 | 0.179 | 120 | 110 | 7.5 | 5.9 | 0.8 | 99.1% | 86.4% | 4.5 | 13.4 | 15.1 | 15.5 | 15.5 | 15.8 | 15.3 | 15.9 | | |
| Example 4 | 109 | 10 | 0.4 | 120 | 110 | 15 | 11.24 | 1.88 | 99.1% | 89.0% | 4.7 | 2.3 | 7.6 | 12 | 15.7 | 17.7 | 17.5 | 17.6 | | |
| Example 5 | 103.5 | 5.1 | 0.179 | 120 | 110 | 7.5 | 5.9 | 0.8 | 94.1% | 86.4% | 4.5 | | | | | | | | 0/10 | 0/10 |
| Example 6 | 109.9 | 5.1 | 0.179 | 120 | 110 | 7.5 | 5.9 | 0.8 | 99.9% | 86.4% | 4.5 | | | | | | | | 0/10 | 0/10 |
| Example 7 | 109 | 5.1 | 0.26 | 120 | 110 | 7.5 | 5.9 | 0.8 | 99.1% | 86.4% | 3.1 | | | | | | | | | |
| Example 8 | 109 | 5.1 | 0.3 | 120 | 110 | 7.5 | 5.9 | 0.8 | 99.1% | 86.4% | 2.7 | | | | | | | | | |
| Example 9 | 64 | 5.1 | 0.05 | 75 | 65 | 7.5 | 5.9 | 0.8 | 98.5% | 86.4% | 16.0 | | | | | | | | | |
| Example 10 | 64 | 5.1 | 0.04 | 75 | 65 | 7.5 | 5.9 | 0.8 | 98.5% | 86.4% | 20.0 | | | | | | | | | |
| Example 11 | 64 | 5.1 | 0.179 | 75 | 65 | 7.5 | 5.9 | 0.8 | 98.5% | 86.4% | 4.5 | | | | | | | | | |
| Example 12 | 64 | 5.1 | 0.179 | 75 | 65 | 7.5 | 5.9 | 0.8 | 98.5% | 86.4% | 4.5 | | | | | | | | | |
| Comparative example 1 | 64 | 5.1 | 0.179 | 75 | 65 | 7.5 | 5.9 | 0.8 | 98.5% | 86.4% | 4.5 | 0 | 0 | 0 | 0 | 0 | 0 | 0 | | |
| Comparative example 2 | 103 | 5.1 | 0.179 | 120 | 110 | 7.5 | 5.9 | 0.8 | 93.6% | 86.4% | 4.5 | | | | | | | | 1/10 | 4/10 |
| Comparative example 3 | 103 | 5.1 | 0.179 | 120 | 110 | 7.5 | 5.9 | 0.8 | 100.0% | 86.4% | 4.5 | | | | | | | | | |

| | | | | | | | | | | | | | | | | | | | | |
|---|---|---|---|---|---|---|---|---|---|---|---|---|---|---|---|---|---|---|---|---|
| L = length, ϕ = diameter, T = thickness | | | | | | | | | | | | | | | | | | | | |

### (Example 2)

The allyl isothiocyanate volatile agent obtained in Example 1 was bent at its center by hand so that the inner vessel was broken and the allyl isothiocyanate flowed into the outer vessel, left at 30°C temperature, and was weighed chronically, its decrease of weight per day being taken as amount of release of the allyl isothiocyanate. The result is shown in Table 1. Also, remaining amount of allyl isothiocyanate was visually observed to assess capability of indication, and decrease of the amount of the liquid in the vessel could be visually observed. Further, through chronic change of the weight, the entire amount of the allyl isothiocyanate was observed to be completely released in 102 days.

### (Example 3)

An allyl isothiocyanate volatile agent was prepared in the same manner as in Example 1, except that the length of the inner vessel was 109 mm, the length of the outer vessel was 120 mm and the inner length of the outer vessel was 110 mm. With this allyl isothiocyanate volatile agent, measurement of release amount and visual observation were performed in the same manner as in Example 2. The result of the measurement of release amount is shown in Table 1. Also, in the visual observation, similarly to Example 2, decrease of the remaining amount of the liquid was confirmed.

### (Example 4)

An allyl isothiocyanate volatile agent was prepared in the same manner as in Example 3, except that the inner vessel measured 10 mm in outer diameter and 0.4 mm in thickness, and the outer vessel measured 15 mm in outer diameter, 11.24 mm in inner diameter and 1.88 mm in thickness. With this allyl isothiocyanate volatile agent, measurement of release amount and visual observation were performed in the same manner as in Example 3. The result of the measurement of release amount is shown in Table 1. Also, in the visual observation, similarly to Example 2, decrease of the remaining amount of the liquid was confirmed.

### (Comparative Example 1)

An allyl isothiocyanate volatile agent was obtained in the same manner as in Example 1, except that the allyl isothiocyanate was replaced with eucalyptus oil (made by Ogawa & Co., Ltd.). With this agent, measurement of release amount and assessment of capability of indication were made in the same manner as in Example 2. No decrease of weight was observed and decrease of the remaining amount of the liquid could not be visually observed.

### <Impact Test>

### (Example 5)

An allyl isothiocyanate volatile agents were obtained in the same manner as in Example 3, except that the inner vessel had a length of 103.5 mm (Y/X = 94.1 %) and the amount of allyl isothiocyanate injected was 1.3 g. The obtained allyl isothiocyanate volatile agents were dropped from height of 1.5 m onto a concrete floor, with the respective agents positioned horizontally or vertically to the floor. The test was performed for 10 agents for each falling position, and whether the inner vessels were broken or not were visually observed. The result is shown in Table 1. No breakage of the inner vessel was observed for either falling position.

### (Example 6)

Allyl isothiocyanate volatile agents were prepared and the test was performed in the same manner as in Example 5, except that the inner vessel had a length of 109.9 mm (Y/X = 99.9 %). The result is shown in Table 1. No breakage of the inner vessel was observed for either falling position.

### (Comparative Example 2)

Allyl isothiocyanate volatile agents were prepared and the test was performed in the same manner as in Example 5, except that the inner vessel had a length of 103 mm (Y/X = 93.6 %). For one agent dropped horizontally and for four agents dropped vertically, breakage of the inner vessels was observed.

### <Manufacturing Problem>

### (Comparative Example 3)

Attempts were made to prepare an allyl isothiocyanate volatile agent in the same manner as in Example 5, except that the inner vessel had a length of 110 mm. However, the inner vessel was broken during welding of the outer vessel, and the intended allyl isothiocyanate volatile agent could not be obtained.

### <Bending Test>

### (Example 7)

Ten allyl isothiocyanate volatile agents were prepared in the same manner as in Example 3, except that the inner vessel had a thickness of 0.26 mm. Each of these allyl isothiocyanate volatile agents was bent 4 times at the same center position by hand so that the inner vessel was broken. Then whether the allyl isothiocyanate leaked outside the outer vessel at the bent point or not was observed for each of these ten agents. No leakage was found for any agent.

### (Example 8)

Allyl isothiocyanate volatile agents were prepared in the same manner as in Example 7, except that the inner vessel had a thickness of being 0.3 mm. A bending test was performed for these agents in the same manner as in Example 7. Leakage to the outside of the outer vessel was observed for six agents.

### <Generation of pin holes>

### (Example 9)

An allyl isothiocyanate volatile agent was prepared in the same manner as in Example 1, except that the inner vessel had a thickness of 0.05 mm. In order to check the existence of any pin hole in the welded area of the inner vessel of the obtained allyl isothiocyanate volatile agent, whether the allyl isothiocyanate leaked outside the inner vessel or not was visually observed, and no leakage was found.

### (Example 10)

An allyl isothiocyanate volatile agent was prepared in the same manner as in Example 9, except that inner vessel had a thickness of 0.04 mm. The same observation as in Example 9 was made. Pin holes were found in the welded area and slight leakage of allyl isothiocyanate was observed.

<Coloring with coloring agents>

### (Example 11)

An allyl isothiocyanate volatile agent was prepared in the same manner as in Example 1, except that the allyl isothiocyanate to be sealed in the inner vessel was colored in advance with 0.7 mg cyanine blue (4927; made by Dainichiseika Color & Chemicals Mfg. Co., Ltd.). This agent was bent at the center by hand in the same manner as in Example 2 so that the inner vessel was broken, and remaining amount of the allyl isothiocyanate was visually and chronically observed. The remaining amount of the allyl isothiocyanate could be observed more clearly than in Example 2.

### (Example 12)

An allyl isothiocyanate volatile agent was prepared in the same manner as in Example 1, except that 0.7 mg of cyanine blue was sealed in the outer vessel. This agent was bent at the center by hand in the same manner as in Example 2 so that the inner vessel was broken and the allyl isothiocyanate flowed into the outer vessel, and the allyl isothiocyanate was colored. Then the remaining amount of the allyl isothiocyanate was visually observed. The remaining amount was observed more clearly than in Example 2.

### (Example 13)

An allyl isothiocyanate volatile agent was prepared in the same manner as in Example 11, except that the cyanine blue was replaced with oily dye Plast Blue 8516 (made by Arimoto Chemical Co., Ltd.). The same observation as in Example 11 was performed. The remaining amount of the allyl isothiocyanate was observed more clearly than in Example 2.

### (Example 14)

An allyl isothiocyanate volatile agent was prepared in the same manner as in Example 11, except that the cyanine blue was replaced with vitamin E (made by Riken Vitamin Co., Ltd.; E-Oil Super 60). The same observation as in Example 11 was performed. The remaining amount of the allyl isothiocyanate could be observed more clearly than in Example 2.

### (Example 15)

An allyl isothiocyanate volatile agent was prepared in the same manner as in Example 2, except that the content of the allyl isothiocyanate was reduced to 0.3 g and 0.4 g of octanoic acid-decanoic acid-triglyceride (made by The Nisshin OilliO Group, Ltd.; ODO) was added. Amount of release of the allyl isothiocyanate was observed chronically on the daily basis. The result is shown in Table 2. After approximately one third of the total amount of the allyl isothiocyanate was released, there was no more release.

**[Table 2]**

| Example 15 | | | | | | | |
|---|---|---|---|---|---|---|---|
| Days passed | 5 | 7 | 9 | 14 | 16 | 19 | 22 |
| Amount of release (mg/day) | 8.4 | 7.5 | 6.9 | 4.2 | 2.2 | 0.8 | 0 |

## Claims

1. An allyl isothiocyanate volatile agent comprising a cylindrical, breakable inner vessel made of glass and containing and sealing allyl isothiocyanate therein, and a cylindrical outer vessel made of a resin that is flexible and permeable to allyl isothiocyanate, said outer vessel sealing said inner vessel therein,
wherein the ratio Y/X of the inner length X of said outer vessel and the outer length Y of said inner vessel is 94% or over and 99.9% or under, wherein the ratio Q/P of the inner diameter P of said outer vessel and the outer diameter Q of said inner vessel is 75% or over and 99.9% or under, wherein said inner vessel prevents said allyl isothiocyanate from being released before said inner vessel is broken, and wherein said allyl isothiocyanate can be released, permeating said outer vessel, after said inner vessel is broken by applying stress from outside of said outer vessel.

2. The allyl isothiocyanate volatile agent according to claim 1 wherein said inner vessel has a wall thickness β of 0.05 mm or over and 0.6 mm or under, and wherein the ratio α/β of the wall thickness α of said outer vessel and wall thickness β of said inner vessel is 3 or over and 10 or under.

3. The allyl isothiocyanate volatile agent according to claim 1 or 2 wherein the resin forming said outer vessel is transparent or semi-transparent so that the remaining amount of the contained allyl isothiocyanate can be visually observed.

4. The allyl isothiocyanate volatile agent according to any of claims 1 to 3 wherein said resin forming said outer vessel is polypropylene.

5. The allyl isothiocyanate volatile agent according to claim 3 or 4 wherein said allyl isothiocyanate is colored with a coloring agent so that the remaining amount of said allyl isothiocyanate is visually observed.

6. The allyl isothiocyanate volatile agent according to claim 3 or 4 wherein a coloring agent is contained in the space between said outer vessel and said inner vessel so that, after said inner vessel is broken, said allyl isothiocyanate is colored with said coloring agent and the remaining amount of said allyl isothiocyanate can be visually observed.

7. The allyl isothiocyanate volatile agent according to claim 5 or 6 wherein said coloring agent is an organic pigment.

## Patentansprüche

1. Allylisothiocyanat-Verflüchtigungsmittel umfassend einen zylindrischen, zerbrechlichen inneren Behälter, welcher aus Glas besteht und Allyl-Isothiocyanat enthält und darin abdichtet, und einen zylindrischen äußeren Behälter, bestehend aus einem Harz, welches flexibel und für Allylisothiocyanat durchlässig ist, wobei der äußere Behälter den inneren Behälter abdichtet,
wobei das Verhältnis Y/X der inneren Länge X des äußeren Behälters und der äußeren Länge Y des inneren Behälters 94% oder mehr und 99,9% oder weniger beträgt, wobei das Verhältnis Q/P des inneren Durchmessers P des äußeren Behälters und des äußeren Durchmessers Q des inneren Behälters 75% oder mehr und 99,9% oder weniger beträgt,
wobei der innere Behälter verhindert, dass das Allylisothiocyanat freigegeben wird, bevor der innere Behälter zerbrochen wird, und wobei das Allylisothiocyanat freigegeben werden kann und durch den äußeren Behälter dringt, nachdem der innere Behälter zerbrochen wurde, indem Druck von außen auf den äußeren Behälter ausgeübt wird.

2. Allylisothiocyanat-Verflüchtigungsmittel nach Anspruch 1, wobei der innere Behälter eine Wanddicke β von 0,05 mm oder mehr und 0,6 mm oder weniger aufweist, und wobei das Verhältnis α/β der Wanddicke α des äußeren Behälters und der Wanddicke β des inneren Behälters 3 oder mehr und 10 oder weniger beträgt.

3. Allylisothiocyanat-Verflüchtigungsmittel nach Anspruch 1 oder 2, wobei das den äußeren Behälter bildende Harz transparent oder semitransparent ist, so dass der übrigbleibende Rest des enthaltenen Allylisothiocyanat optisch beobachtet werden kann.

4. Allylisothiocyanat-Verflüchtigungsmittel nach einem der Ansprüche 1 bis 3, wobei das den äußeren Behälter formende Harz Polypropylen ist.

5. Allylisothiocyanat-Verflüchtigungsmittel nach Anspruch 3 oder 4, wobei das Allylisothiocyanat mit einem Farbmittel bzw. Farbstoff gefärbt ist, so dass der übrigbleibende Rest des Allylisothiocyanats optisch beobachtbar ist.

6. Flüchtiges Allylisothiocyanatmittel nach Anspruch 3 oder 4, wobei der Farbstoff in dem Raum zwischen dem äußeren Behälter und dem inneren Behälter enthalten ist, so dass das Allylisothiocyanat mit dem Farbstoff gefärbt wird, nachdem der innere Behälter zerbrochen wurde, und die restliche Menge des Allylisothiocyanats optisch beobachtet werden kann.

7. Allylisothiocyanat-Verflüchtigungsmittel nach Anspruch 5 oder 6, wobei der Farbstoff ein organisches Pigment ist.

## Revendications

1. Agent volatile à isothiocyanate d'allyle comprenant un récipient interne cylindrique cassable en verre, dans lequel est contenu et scellé de l'isothiocyanate d'allyle, et un récipient externe cylindrique en résine, qui est flexible et perméable à l'isothiocyanate d'allyle, ledit récipient interne étant scellé dans ledit récipient externe,
dans lequel le ratio Y/X de la longueur interne X dudit récipient externe et de la longueur externe Y dudit récipient interne est supérieur ou égal à 94 % et inférieur ou égal à 99,9 %, dans lequel le ratio Q/P du diamètre interne P dudit récipient externe et du diamètre externe Q dudit récipient interne est supérieur ou égal à 75 % et inférieur ou égal à 99,9 %, dans lequel ledit récipient interne évite audit isothiocyanate d'allyle d'être libéré avant que ledit récipient interne ne soit cassé, et dans lequel ledit isothiocyanate d'allyle peut être libéré, traversant ledit récipient externe, après que ledit récipient interne est cassé en appliquant une contrainte depuis l'extérieur dudit récipient externe.

2. Agent volatile à isothiocyanate d'allyle selon la revendication 1, dans lequel ledit récipient interne présente une épaisseur de paroi β supérieure ou égale à 0,05 mm et inférieure ou égale à 0,6 mm, et dans lequel le ratio α/β de l'épaisseur de paroi α dudit récipient externe et de l'épaisseur de paroi β dudit récipient interne est supérieur ou égal à 3 et inférieur ou égal à 10.

3. Agent volatile à isothiocyanate d'allyle selon la revendication 1 ou 2, dans lequel la résine formant ledit récipient externe est transparente ou semi-transparente, de telle sorte que la quantité restante de l'isothiocyanate d'allyle contenu peut être observée visuellement.

4. Agent volatile à isothiocyanate d'allyle selon l'une quelconque des revendications 1 à 3, dans lequel ladite résine formant ledit récipient externe est une résine polypropylène.

5. Agent volatile à isothiocyanate d'allyle selon la revendication 3 ou 4, dans lequel ledit isothiocyanate d'allyle est coloré avec un agent colorant de telle sorte que la quantité restante dudit isothiocyanate d'allyle peut être observée visuellement.

6. Agent volatile à isothiocyanate d'allyle selon la revendication 3 ou 4, dans lequel un agent colorant est contenu dans l'espace compris entre ledit récipient externe et ledit récipient interne, de telle sorte qu'après que ledit récipient interne est cassé, ledit isothiocyanate d'allyle est coloré avec ledit agent colorant et la quantité restante dudit isothiocyanate d'allyle peut être observée visuellement.

7. Agent volatile à isothiocyanate d'allyle selon la revendication 5 ou 6, dans lequel ledit agent colorant est un pigment organique.
